# FASCICULE DE BREVET EUROPEEN

(11) **EP 1 344 680 B1**
(45) Date de publication et mention de la délivrance du brevet: **11.02.2009**
(21) Numéro de dépôt: 03356022.8
(22) Date de dépôt: 07.02.2003
(51) Int. Cl.: B60N 2/68, B60N 2/015, F16B 9/02

(54) **Compensateur de défaut de parallélisme pour siège amovible de véhicule**
Kompensator für Fehler der Parallelität für abnehmbaren Fahrzeugsitz
Compensator for parallelism errors for removable vehicle seat

(30) Priorité: 15.03.2002 FR 0203498
(43) Date de publication de la demande: 17.09.2003
(73) Titulaire: GRUPO ANTOLIN-INGENIERIA, S.A., 09080 Burgos (ES)
(72) Inventeur: Duchateau, Jean, 43330 Pont Salomon (FR); Basson, Gérard, 42230 Roche La Moliere (FR); Hamtache, Nordine, 42700 Firminy (FR)
(74) Mandataire: Maureau, Philippe

(56) Documents cités:
- EP-A- 0 783 990
- DE-A- 4 308 015
- FR-A- 2 812 251

## Description

L'invention est relative à un compensateur de défaut de parallélisme pour un siège amovible de véhicule.

Elle concerne les sièges de véhicule automobile et, plus spécialement, les sièges amovibles comportant, d'une part, des moyens d'ancrage sur des glissières longitudinales fixées au plancher du véhicule, et, d'autre part, des moyens permettant de régler leur position longitudinale avec verrouillage dans la position choisie.

Dans ces sièges, la structure d'assise est solidaire d'un piétement formé par deux sous-ensembles, respectivement droit et gauche, comportant, chacun, des moyens de positionnement par rapport à la glissière correspondante, des moyens de guidage en translation transversale et longitudinale par rapport à la glissière, des moyens de verrouillage sur la glissière, tels que des pênes ou verrous articulés coopérant avec des moyens complémentaires de la glissière, tels que retours, crans ou encoches.

Malgré le soin apporté à la fabrication et à la pose des glissières, mais aussi des piétements de chaque siège, le cumul des tolérances de fabrication peut, pour certaines combinaisons siège-glissière, entraîner des coincements ou des passages plus résistants lors du déplacement longitudinal d'un piétement de siège dans les glissières.

De plus, dans le temps, des déformations du plancher peuvent altérer les positions relatives de deux glissières initialement parallèles, en leur donnant une forme en « V » en plan par-dessus, et/ou une inclinaison différente par rapport au plan du plancher, c'est-à-dire générer de nouvelles conditions altérant le glissement, et voire même la remise en place lors du positionnement du siège.

Ces inconvénients se rencontrent d'autant plus qu'un siège passager peut occuper une place quelconque sur le plancher, car alors les défauts des glissières s'ajoutent aux défauts des sièges.

Considérant que les sous-ensembles, respectivement droit et gauche de la structure d'assise, sont liés rigidement l'un à l'autre par des traverses, la demanderesse propose, par sa demande de brevet français FR 2 812 251 A, remédier à ces défauts de parallélisme en équipant l'un des flasques d'au moins un chariot qui, d'une part, est monté flottant en translation transversale par rapport à ce flasque, et, d'autre part, est lié à ce dernier par un seul axe transversal avec possibilité de pivotement dans le plan vertical.

La présente invention vise à remédier à ces défauts de parallélisme par un compensateur plus simple, moins onéreux, applicable sur tous sièges dans lesquels la structure d'assise de siège comprend deux flasques latéraux rigides reliés par des traverses.

Selon l'invention, chacune des traverses de liaison des flasques du siège est munie, à au moins l'une de ses extrémités, d'un embout axial, cylindrique et épaulé, par lequel elle est engagée avec jeu radial dans un manchon en matériau viscoélastique, lui-même emmanché serré dans un palier du flasque correspondant, ledit embout étant muni d'un trou taraudé axial pour une vis de calage en translation plaquant une rondelle contre la face en bout extérieure du manchon, et l'autre face en bout du manchon contre la collerette dudit embout.

Ainsi, en présence d'un défaut de parallélisme dans la liaison d'un siège avec ses deux glissières, que ce soit lors de l'engagement du siège dans ses glissières ou lors de son déplacement dans celles-ci, les efforts de réaction communiqués aux deux flasques sont compensés, et au moins en partie absorbés, par la déformation des manchons viscoélastiques. Cette déformation, qui n'affecte pas la liaison entre les deux flasques, permet à ceux-ci de modifier leur position relative et d'éliminer tout coincement de leur chariot ou coulisseau dans les glissières.

D'autres caractéristiques et avantages ressortiront de la description qui suit en référence au dessin schématique annexé.
Figure 1 est une vue partielle, en perspective, et avec arrachement montrant la structure d'assise d'un siège,
Figures 2 et 3 sont des vues en coupe longitudinale de deux des traverses du siège montrant, chacune, une première forme d'exécution du compensateur,
Figure 4 est une vue, à échelle agrandie, de la partie gauche de la figure 3,
Figure 5 est une vue similaire à figure 4 et montrant une autre forme d'exécution du manchon compensateur,
Figure 6 est une vue de face, en bout, du manchon compensateur représenté à la figure 5.

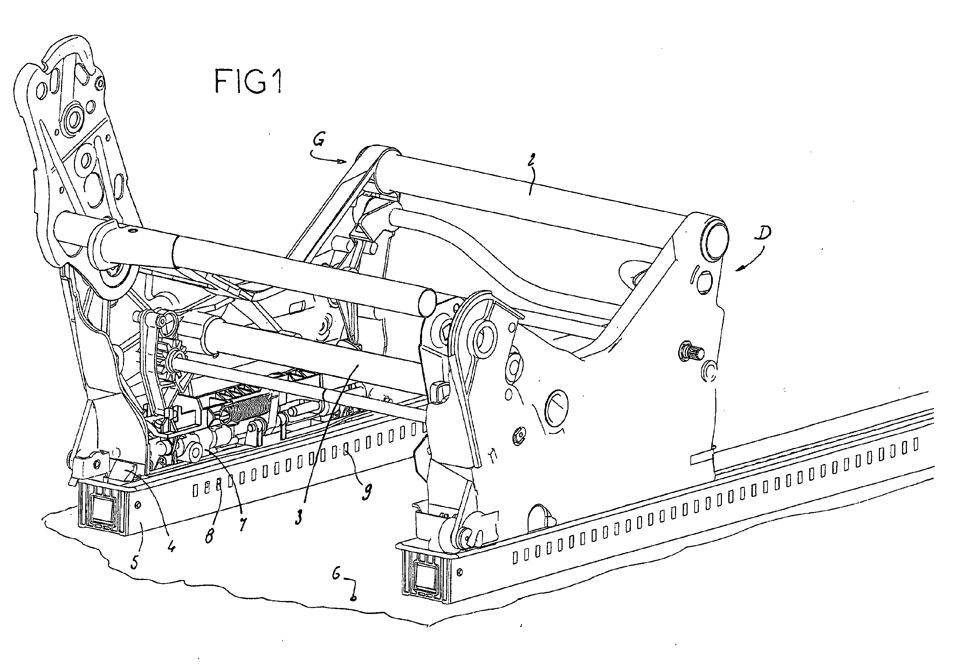

Comme montré à la figure 1, l'invention est relative aux sièges dans lesquels la structure d'assise comprend deux flasques latéraux, respectivement gauche G et droit D, reliés entre eux par des traverses tubulaires et en l'occurrence par une traverse avant 2 et une traverse arrière 3. Chaque flasque porte des moyens 4 de positionnement dans une glissière 5 fixée sur le plancher 6 du véhicule, des moyens de guidage en translation dans cette glissière, non représentés, et des moyens de verrouillage constitués, par exemple, par des leviers 7 dont les doigts 8 pénètrent dans des encoches 9 ménagées dans les ailes de la glissière. Une commande unique, non représentée ici, provoque le pivotement des leviers 7 de chacun des flasques G et D pour déverrouiller la structure d'assise par rapport aux glissières, pour permettre son déplacement par rapport à ces glissières ou pour amener les leviers dans une position permettant l'extraction de la structure de la glissière. Ces divers moyens, étant bien connus de l'état de la technique et indépendants de l'invention, n'ont pas à être décrits plus en détails.

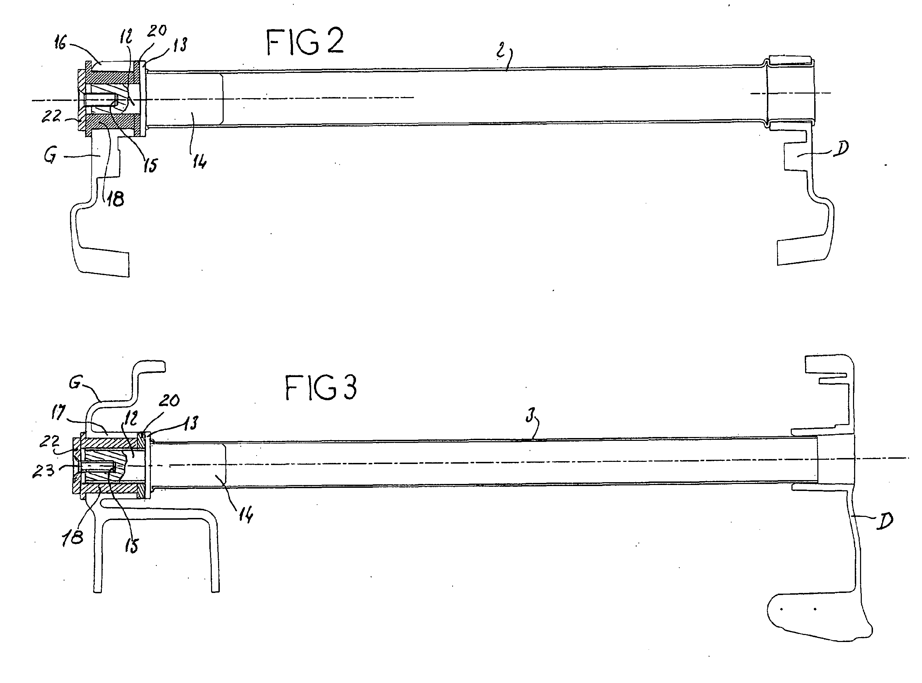

Dans la forme d'exécution représentée aux figures 2 et 3, chacune des traverses 2 et 3 est liée positivement par l'une de ses extrémités, en l'occurrence son extrémité droite, au flasque D correspondant. A son autre extrémité, elle comporte un embout cylindrique 12, épaulé par une collerette 13 et solidaire d'une partie d'emmanchement 14 par laquelle elle est emmanchée dans l'extrémité libre de la traverse 2. L'embout 12 comporte un trou taraudé axial 15.

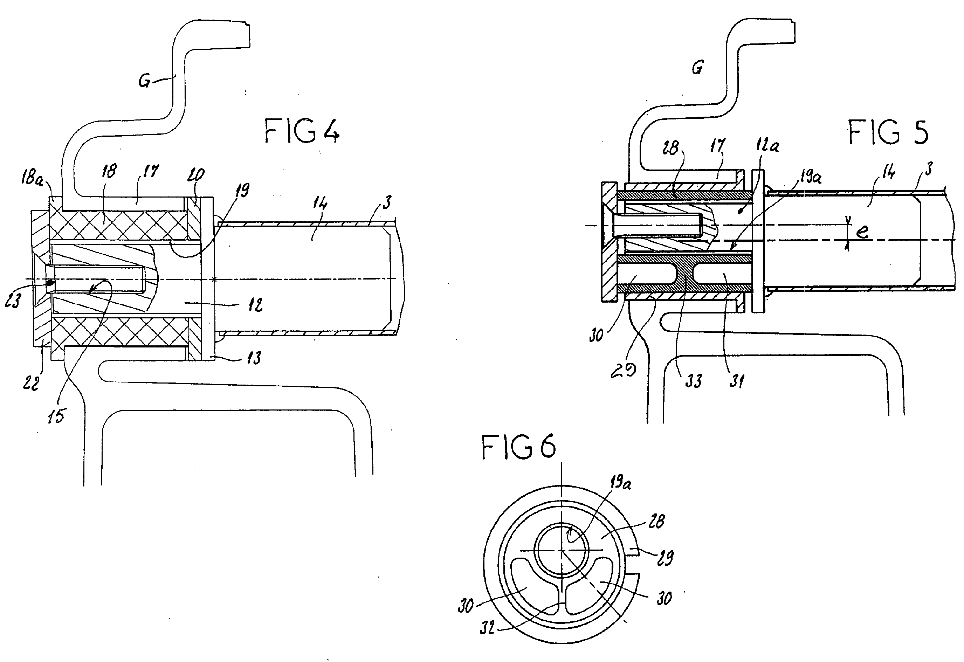

La partie du flasque G, coopérant avec l'extrémité de chacune des traverses 2 et 3, est aménagée en forme de palier 16 à la figure 2, 17 à la figure 3. Comme montré à échelle agrandie à la figure 4, chacun de ces paliers est destiné à recevoir, par emmanchement serré, un manchon viscoélastique 18 dont l'alésage interne 19 a un plus grand diamètre que celui de l'embout 12.

Dans la forme d'exécution représentée, le manchon 18 est en forme de douille cylindrique et est équipé sur son extrémité extérieure d'une collerette 18a. Son extrémité intérieure vient en appui contre une rondelle 20, en matériau viscoélastique, disposée autour de l'embout 12 et interposé entre la collerette 13 de l'embout et la face en bout du palier 17 recevant le manchon 18.

Le calage en translation de ces différents éléments est assuré par une rondelle métallique 22 qui est plaquée contre la face en bout extérieur du manchon 18 par une vis axiale 23 se vissant dans le trou axial taraudé 15. Le serrage de la vis assure également, par l'intermédiaire du manchon 18, le plaquage de la rondelle 20 contre la collerette 13.

Les figures 2 et 3 montrent que, excepté la forme générale des paliers 16 et 17, les moyens mis en oeuvre sont identiques pour les deux traverses 2 et 3.

Lorsque les flasques sont soumis, dans le plan vertical ou dans le plan horizontal, à des efforts consécutifs à des défauts de parallélisme entre les deux glissières ou entre la structure d'assise et les glissières, ces défauts sont automatiquement compensés par déformation élastique des manchons 18 et/ou de la rondelle 20. Grâce à ce caractère viscoélastique des manchons 18, cette déformation s'effectue sans bruit et de manière élastique, de sorte que les flasques G et D peuvent reprendre leur position d'origine si le siège est à nouveau déplacé ou enlevé.

Bien que l'aménagement d'une articulation élastique à seulement l'une des extrémités de chacune des traverses 2 et 3 soit suffisant pour compenser les défauts de parallélisme entre la structure de siège et des glissières, il est également possible, dans des constructions très élaborées ayant des tolérances dimensionnelles de fabrication plus large, de mettre en oeuvre des articulations élastiques à chacune des extrémités des traverses.

Dans la forme d'exécution représentée aux figures 5 et 6, le manchon viscoélastique 28 conserve sa forme extérieure cylindrique, mais est emmanché dans une bague métallique 29 et comporte un alésage 19a pour l'embout 12a qui est excentré de la valeur e par rapport à l'axe du manchon.

Dans la forme d'exécution représentée, l'embout 12a est également excentré par rapport à l'axe de la traverse 3, mais il peut aussi être coaxial avec l'axe de celle-ci et avec sa partie d'emmanchement 14. L'excentration de l'alésage 19a dans le manchon 28 permet de former, dans ce manchon, une zone de plus grande épaisseur radiale dans laquelle est ménagé, au moins un, et dans la forme d'exécution représentée plusieurs alvéoles 30 débouchant de chacune des faces en bout du manchon 28.

Dans la forme d'exécution représentée, deux alvéoles 30 débouchent de la face en bout extérieure et deux alvéoles 31 débouchent de la face en bout intérieure. Chacun des alvéoles est séparé de celui juxtaposé par un voile de matière 32 et est séparé, par un voile de matière 33, de l'alvéole qui est disposé dans son prolongement.

La figure 5 montre que cette articulation élastique se monte de la même façon que la précédente, par emmanchement serré dans le palier 17 et avec jeu radial par rapport à l'embout 12a. La présence des alvéoles 30, 31 donne au manchon une plus grande possibilité de déformation élastique et lui permet donc d'absorber des défauts de parallélisme plus importants.

## Revendications

1. Compensateur de défaut de parallélisme pour siège amovible de véhicule dans lequel la structure d'assise du siège comprend deux flasques latéraux rigides (G, D) reliés par des traverses (2, 3) et portant, chacun, des moyens de positionnement dans une glissière (5) fixée sur le plancher (6) du véhicule, des moyens de guidage en translation et des moyens de verrouillage dans la glissière, structure dans laquelle chacune des traverses (2, 3) est tubulaire et cylindrique et coopère avec des paliers (16, 17) portés par chacun des flasques (G et D), **caractérisé en ce que** chacune des traverses de liaison (2, 3) des flasques (G, D) du siège est munie, à au moins l'une de ses extrémités, d'un embout axial (12, 12a), cylindrique et épaulé, par lequel elle est engagée avec jeu radial dans un manchon (18, 28) en matériau viscoélastique, lui-même emmanché serré dans un palier (16, 17) du flasque correspondant, ledit embout (12) étant muni d'un trou taraudé axial (15) pour une vis (23) de calage en translation plaquant une rondelle (22) contre la face en bout extérieure du manchon (18, 28), et l'autre face en bout du manchon contre la collerette (13) dudit embout.

2. Compensateur de défaut de parallélisme selon la revendication 1, **caractérisé en ce que** la collerette (13) de l'embout (12) reçoit l'appui d'une rondelle (20) en matériau viscoélastique, interposée entre cette collerette et la face en bout intérieure du manchon viscoélastique (18).

3. Compensateur de défaut de parallélisme selon la revendication 1, **caractérisé en ce que**, dans le manchon viscoélastique (28), l'alésage (19a) pour l'embout (12a) de la traverse (2, 3) est excentré par rapport à l'axe longitudinal de ce manchon pour former une zone de plus grande épaisseur radiale dans laquelle est ménagé au moins un alvéole (30) d'augmentation de la déformabilité élastique du manchon (28), ledit alvéole (30) débouchant d'au moins l'une des faces en bout du manchon.

## Claims

1. Compensator for parallelism errors for a removable vehicle seat, in which the seat part structure of the seat has two rigid side plates (G, D) connected by crossmembers (2, 3) and each supporting means for positioning in a slideway (5) fixed to the floor pan (6) of the vehicle, means for translational guidance and means for locking in the slideway, in which structure each of the crossmembers (2, 3) is tubular and cylindrical and acts in conjunction with bearings (16, 17) supported by each of the side plates (G and D) , **characterized in that** each of the crossmembers (2, 3) connecting the side plates (G, D) of the seat is provided, at least at one of its ends, with a cylindrical and shouldered axial end fitting (12, 12a) via which said crossmember is engaged with radial play into a viscoelastic sleeve (18, 28) which is itself fitted tightly into a bearing (16, 17) of the corresponding side plate, said end fitting (12) being provided with an axial tapped hole (15) for a screw (23) preventing translational movement and pressing a washer (22) against the outer end face of the sleeve (18, 28) and pressing the other end face of the sleeve against the collar (13) of said end fitting.

2. Compensator for parallelism errors according to Claim 1, **characterized in that** the collar (13) of the end fitting (12) has a viscoelastic washer (20) bearing against it, said washer being inserted between this collar and the inner end face of the viscoelastic sleeve (18).

3. Compensator for parallelism errors according to Claim 1, **characterized in that**, in the viscoelastic sleeve (28), the bore (19a) for the end fitting (12a) of the crossmember (2, 3) is off-centre with respect to the longitudinal axis of this sleeve in order to form a radially thicker region in which at least one cavity (30) for increasing the elastic deformability of the sleeve (28) is located, said cavity (30) opening out onto at least one of the end faces of the sleeve.

## Patentansprüche

1. Kompensator für fehlende Parallelität bei einem entfernbaren Fahrzeugsitz, wobei die Sitzstruktur des Sitzes zwei starre seitliche Endplatten (G, D) umfasst, die über Querstreben (2, 3) verbunden sind und jeweils Mittel zur Positionierung in einer am Boden (6) des Fahrzeugs befestigten Gleitbahn (5), Translationsführungsmittel und Mittel zur Verriegelung in der Gleitbahn tragen, wobei jede der Querstreben (2, 3) in der Struktur rohrförmig und zylindrisch ist und mit Lagern (16, 17), die jeweils von den Endplatten (G und D) getragen werden, zusammenwirkt, **dadurch gekennzeichnet, dass** jede der die Endplatten (G, D) des Sitzes verbindenden Querstreben (2, 3) mindestens an einem ihrer Enden mit einem zylindrischen und abgestuften axialen Endstück (12, 12a) versehen ist, über das sie mit radialem Spiel in einer Muffe (18, 28) aus viskoelastischem Material in Eingriff steht, die ihrerseits straff in ein Lager (16, 17) der entsprechenden Endplatte eingepasst ist, wobei das Endstück (12) mit einem axialen Gewindeloch (15) für eine Schraube (23) zur Verkeilung gegen Translation versehen ist, die eine Unterlegscheibe (22) gegen die äußere Endfläche der Muffe (18, 28) und die andere Endfläche der Muffe gegen den Flansch (13) des Endstücks drückt.

2. Kompensator für fehlende Parallelität nach Anspruch 1, **dadurch gekennzeichnet, dass** am Flansch (13) des Endstücks (12) eine Unterlegscheibe (20) aus viskoelastischem Material anliegt, die zwischen diesem Flansch und der inneren Endfläche der viskoelastischen Muffe (18) liegt.

3. Kompensator für fehlende Parallelität nach Anspruch 1, **dadurch gekennzeichnet, dass** die Bohrung (19a) in der viskoelastischen Muffe (28) für das Endstück (12a) der Querstrebe (2, 3) bezüglich der Längsachse dieser Muffe versetzt ist, so dass ein Bereich mit größerer radialer Dicke gebildet wird, der mindestens einen Hohlraum (30) zur Erhöhung der elastischen Verformbarkeit der Muffe (28) aufweist, wobei der Hohlraum (30) an mindestens einer der Endflächen der Muffe mündet.
